# EUROPÄISCHE PATENTANMELDUNG

(11) **EP 4 199 173 A1**
(43) Veröffentlichungstag der Anmeldung: **21.06.2023**
(21) Anmeldenummer: 21215178.1
(22) Anmeldetag: 16.12.2021
(51) Int. Cl.: H01M 10/42, H01M 10/48, H01M 50/204, H01M 50/213, H01M 50/244, H01M 50/247, H01M 50/284, H01M 50/287, H01M 50/291, H01M 50/30, H01M 50/502, H01M 50/543

(54) **AKKUPACK ZUR VERSORGUNG EINES ELEKTRISCH ANGETRIEBENEN BEARBEITUNGSGERÄTS MIT ELEKTRISCHER ANTRIEBSLEISTUNG, BEARBEITUNGSSYSTEM UND VERFAHREN ZUR HERSTELLUNG EINES AKKUPACKS**

(71) Anmelder: Andreas Stihl AG & Co. KG, 71336 Waiblingen (DE)
(72) Erfinder: Behringer, Patrick, 73760 Ostfildern (DE); Pickhardt, Moritz, 24105 Kiel (DE); Wegmann, Raphael, 71229 Leonberg (DE)
(74) Vertreter: Patentanwälte Ruff, Wilhelm, Beier, Dauster & Partner mbB

(57) **Zusammenfassung**

Die Erfindung bezieht sich auf einen Akkupack (1) zur Versorgung eines elektrisch angetriebenen Bearbeitungsgeräts (101) mit elektrischer Antriebsleistung (AL), wobei der Akkupack (1) aufweist:
- Akkumulatorzellen (3),
- einen Zellhalter (4), wobei der Zellhalter (4) die Akkumulatorzellen (3) hält und mindestens einen Tauchzapfen (5) aufweist,
- eine Überwachungs- und/oder Kontroll-Elektronik und/oder -Sensorik und/oder mindestens einen Konnektor (6), wobei die Überwachungs- und/oder Kontroll-Elektronik und/oder -Sensorik und/oder der mindestens eine Konnektor (6) zur Überwachung und/oder Kontrolle und/oder Messung und/oder Kontaktierung der Akkumulatorzellen (3) ausgebildet sind/ist, und
- einen Schutzstoff (7), wobei der Schutzstoff (7) die Überwachungs- und/oder Kontroll-Elektronik und/oder -Sensorik und/oder den mindestens einen Konnektor (6) mindestens teilweise einschließt und hält,
- wobei der mindestens eine Tauchzapfen (5) entlang einer Zapfen-Richtung (z) von den Akkumulatorzellen (3) zu der Überwachungs- und/oder Kontroll-Elektronik und/oder -Sensorik und/oder dem mindestens einen Konnektor (6) derart vorsteht, dass der mindestens eine Tauchzapfen (5) in den Schutzstoff (7) derart hinein taucht, dass der Schutzstoff (7) den Zellhalter (4) in Bezug auf die Überwachungs- und/oder Kontroll-Elektronik und/oder -Sensorik und/oder den mindestens einen Konnektor (6) entlang mindestens einer Quer-Richtung (x, y) quer in Bezug auf die Zapfen-Richtung (z) hält.

## Beschreibung

### ANWENDUNGSGEBIET UND STAND DER TECHNIK

Die Erfindung bezieht sich auf einen Akkupack zur Versorgung eines elektrisch angetriebenen Bearbeitungsgeräts mit elektrischer Antriebsleistung, ein Bearbeitungssystem aufweisend einen solchen Akkupack und ein elektrisch angetriebenes Bearbeitungsgerät und ein Verfahren zur Herstellung eines solchen Akkupacks.

### AUFGABE UND LÖSUNG

Der Erfindung liegt als Aufgabe die Bereitstellung eines Akkupacks zur Versorgung eines elektrisch angetriebenen Bearbeitungsgeräts mit elektrischer Antriebsleistung, eines Bearbeitungssystems aufweisend einen solchen Akkupack und ein elektrisch angetriebenes Bearbeitungsgerät und eines Verfahrens zur Herstellung eines solchen Akkupacks zugrunde, wobei der Akkupack und das Verfahren und somit das Bearbeitungssystem verbesserte Eigenschaften aufweisen.

Die Erfindung löst die Aufgabe durch die Bereitstellung eines Akkupacks mit den Merkmalen des Anspruchs 1, eines Bearbeitungssystems mit den Merkmalen des Anspruchs 13 und eines Verfahrens mit den Merkmalen des Anspruchs 14. Vorteilhafte Weiterbildungen und/oder Ausgestaltungen der Erfindung sind in den abhängigen Ansprüchen beschrieben.

Der erfindungsgemäße Akkupack (Englisch: battery pack) ist zur Versorgung eines elektrisch angetriebenen Bearbeitungsgeräts mit elektrischer Antriebsleistung ausgebildet. Der Akkupack weist Akkumulatorzellen, mindestens, insbesondere genau, einen Zellhalter, eine Überwachungs- und/oder Kontroll-Elektronik und/oder -Sensorik und/oder mindestens einen Konnektor und einen Schutzstoff auf. Der Zellhalter hält die Akkumulatorzellen und weist mindestens einen Tauchzapfen auf. Die Überwachungs- und/oder Kontroll-Elektronik und/oder - Sensorik und/oder der mindestens eine Konnektor sind/ist zur Überwachung und/oder Kontrolle und/oder Messung und/oder Kontaktierung der Akkumulatorzellen ausgebildet. Der Schutzstoff schließt die Überwachungs- und/oder Kontroll-Elektronik und/oder -Sensorik und/oder den mindestens einen Konnektor mindestens teilweise, insbesondere vollständig, ein und hält diese/n. Der mindestens eine Tauchzapfen erstreckt sich bzw. steht entlang einer Zapfen-Richtung von den Akkumulatorzellen zu der Überwachungs- und/oder Kontroll-Elektronik und/oder -Sensorik und/oder dem mindestens einen Konnektor derart, insbesondere weit, vor, dass der mindestens eine Tauchzapfen in den Schutzstoff derart, insbesondere weit, hinein taucht, dass der Schutzstoff den Zellhalter in Bezug auf die Überwachungs- und/oder Kontroll-Elektronik und/oder -Sensorik und/oder den mindestens einen Konnektor entlang mindestens einer Quer-Richtung quer in Bezug auf die Zapfen-Richtung hält.

Dies ermöglicht, insbesondere der mindestens eine Tauchzapfen, der Schutzstoff und das Hineintauchen ermöglichen, ein gutes und somit zuverlässiges Halten des Zellhalters in Bezug auf die Überwachungs- und/oder Kontroll-Elektronik und/oder -Sensorik und/oder den mindestens einen Konnektor entlang der mindestens einen Quer-Richtung. Somit ermöglicht dies eine Reduzierung oder sogar eine Vermeidung eines Risikos einer Beschädigung des Akkupacks, insbesondere der Überwachungs- und/oder Kontroll-Elektronik und/oder -Sensorik und/oder des mindestens einen Konnektors, bei einer Belastung des Akkupacks, insbesondere aufgrund eines Falls des Akkupacks.

Insbesondere können/kann die Versorgung, die Überwachung und/oder die Kontrolle und/oder die Messung automatisch sein. Zusätzlich oder alternativ kann die Kontrolle eine Steuerung und/oder eine Regelung aufweisen, insbesondere sein.

Das Bearbeitungsgerät kann ein Garten-, Forst-, Bau- und/oder Bodenbearbeitungsgerät und/oder ein Elektrowerkzeug sein.

Für den Begriff "ausgebildet" kann der Begriff "konfiguriert" synonym verwendet werden. Zusätzlich oder alternativ kann für den Begriff "aufweist/aufweisen" der Begriff "umfasst/umfassen" und/oder "hat/haben" synonym verwendet werden.

Die Akkumulatorzellen können zur Versorgung des Bearbeitungsgeräts mit elektrischer Antriebsleistung ausgebildet sein. Zusätzlich oder alternativ können die Akkumulatorzellen jeweils einzelne wiederaufladbare Speicherelemente für elektrische Energie auf elektrochemischer Basis sein. Insbesondere können die Akkumulatorzellen Lithium-Ionen-Akkumulatorzellen sein. Weiter zusätzlich oder alternativ können die Akkumulatorzellen gleich, insbesondere typ- und/oder baugleich, sein.

Das Halten kann fest und/oder unmittelbar und/oder durch Berührung und/oder durch einen Formschluss sein. Zusätzlich oder alternativ kann das Halten gegen Bewegung, insbesondere relativ zueinander, sichern. Weiter zusätzlich oder alternativ kann für den Begriff "hält" der Begriff "fixiert" synonym verwendet werden.

Für den Begriff "Konnektor" kann der Begriff "elektrischer Verbinder" synonym verwendet werden. Zusätzlich oder alternativ kann der Konnektor zur elektrischen und/oder unmittelbaren oder mittelbaren Kontaktierung der Akkumulatorzellen ausgebildet sein.

Die Überwachungs- und/oder Kontroll-Elektronik und/oder -Sensorik kann zur Kontrolle in Abhängigkeit der Überwachung ausgebildet sein. Zusätzlich oder alternativ kann die Überwachungs- und/oder Kontroll-Elektronik und/oder -Sensorik zur Kontrolle, insbesondere Beendigung, einer Abgabe elektrischer Antriebsleistung von dem Akkupack und/oder einer Aufnahme von elektrischer Ladeleistung durch den Akkupack ausgebildet sein.

Der Zellhalter kann oder braucht nicht die Überwachungs- und/oder Kontroll-Elektronik und/oder -Sensorik und/oder den mindestens einen Konnektor halten und/oder tragen, insbesondere ohne Schutzstoff.

Der Schutzstoff kann oder braucht nicht die Akkumulatorzellen einschließen und/oder halten und/oder berühren. Zusätzlich oder alternativ kann der Schutzstoff die Überwachungs- und/oder Kontroll-Elektronik und/oder -Sensorik und/oder den mindestens einen Konnektor schützen, insbesondere vor Feuchtigkeit, insbesondere Wasser, und/oder Fremdkörpern, insbesondere Staub, und/oder elektrisch isolieren. Weiter zusätzlich oder alternativ kann der Schutzstoff in einem ausgehärteten bzw. festen Zustand sein. Weiter zusätzlich oder alternativ kann der Schutzstoff eine Schutzmasse, ein Harzstoff, insbesondere ein Gießharz, und/oder ein Vergussstoff, insbesondere eine Vergussmasse, sein.

Für den Begriffsbestandteil "Tauch" kann der Begriffsbestandteil "Eintauch" und/oder "Verguss" synonym verwendet werden. Zusätzlich oder alternativ kann für den Begriffsbestandteil "Zapfen" der Begriffsbestandteil "Pfeiler", "Pfahl", "Nase", "Vorsprung" und/oder "Vor- und/oder Überstand" synonym verwendet werden.

Für den Begriff "Zapfen-Richtung" kann der Begriff "axiale Richtung", "Längsrichtung" und/oder "vertikale Richtung" synonym verwendet werden. Zusätzlich oder alternativ kann für den Begriff "Quer-Richtung" der Begriff "laterale Richtung", "seitliche Richtung" und/oder "horizontale Richtung" synonym verwendet werden. Weiter zusätzlich oder alternativ kann für den Begriff "quer" der Begriff "orthogonal" synonym verwendet werden.

Für den Begriff "taucht" kann der Begriff "ragt" synonym verwendet werden.

Entlang kann in und/oder entgegen sein.

Der Schutzstoff kann den Zellhalter in Bezug auf die Überwachungs- und/oder Kontroll-Elektronik und/oder -Sensorik und/oder den mindestens einen Konnektor entlang der Zapfen-Richtung halten, insbesondere durch einen Kraftschluss und/oder Adhäsion.

Der Akkupack kann ein Akkupackgehäuse aufweisen. Der Zellhalter, insbesondere und somit die Akkumulatorzellen, die Überwachungs- und/oder Kontroll-Elektronik und/oder -Sensorik und/oder der mindestens eine Konnektor und/oder der Schutzstoff können/kann innerhalb des Akkupackgehäuses, insbesondere an dem Akkupackgehäuse fest und/oder vollständig, angeordnet sein. Insbesondere kann der Schutzstoff den Zellhalter, die Überwachungs- und/oder Kontroll-Elektronik und/oder -Sensorik und/oder den mindestens einen Konnektor in Bezug auf das Akkupackgehäuse halten, insbesondere entlang der mindestens einen Quer-Richtung und/oder der Zapfen-Richtung.

Der Akkupack kann, insbesondere die Akkumulatorzellen können, eine maximale elektrische Antriebsleistung von minimal 10 Watt (W), insbesondere von minimal 100 W, insbesondere von minimal 1 Kilowatt (kW), insbesondere von minimal 2 kW, und/oder von maximal 10 kW, insbesondere von maximal 5 kW, insbesondere von 3 kW, aufweisen. Zusätzlich oder alternativ kann der Akkupack, insbesondere können die Akkumulatorzellen, eine Nennspannung von minimal 1 Volt (V), insbesondere von minimal 2 V, insbesondere von minimal 5 V, insbesondere von minimal 10 V, insbesondere von minimal 20 V, und/oder von maximal 100 V, insbesondere von maximal 50 V, insbesondere von 36 V, aufweisen. Weiter zusätzlich oder alternativ kann der Akkupack, insbesondere können die Akkumulatorzellen, einen, insbesondere elektrischen, maximalen Energieinhalt von minimal 100 Wattstunden (Wh), insbesondere von minimal 200 Wh, und/oder von maximal 4000 Wh, insbesondere von maximal 2000 Wh, insbesondere von maximal 1000 Wh, insbesondere von maximal 500 Wh, insbesondere von 337 Wh, aufweisen.

In einer Weiterbildung der Erfindung weist der Zellhalter mindestens ein, insbesondere quaderförmiges, Halteteil auf. Das mindestens eine Halteteil hält die Akkumulatorzellen. Der mindestens eine Tauchzapfen steht von dem mindestens einen Halteteil, insbesondere einer Außenfläche definiert durch das mindestens eine Halteteil, vor. Dies ermöglicht, dass der Schutzstoff nicht bis zu den Akkumulatorzellen hinreichen kann bzw. zu den Akkumulatorzellen beabstandet sein kann. Insbesondere kann oder braucht der Schutzstoff nicht das Halteteil einschließen und/oder berühren. Zusätzlich oder alternativ kann das quaderförmige Halteteil abgerundete Ecken aufweisen. Weiter zusätzlich oder alternativ können das mindestens eine Halteteil und der mindestens eine Tauchzapfen miteinander einstückig ausgebildet sein. Weiter zusätzlich oder alternativ kann die Außenfläche mit ihrer Flächennormalen nicht-orthogonal, insbesondere parallel, in Bezug auf die Zapfen-Richtung, insbesondere angeordnet, sein.

In einer Weiterbildung der Erfindung weist der Akkupack eine Leiterplatte auf. Die Leiterplatte trägt die Überwachungs- und/oder Kontroll-Elektronik und/oder -Sensorik und/oder den mindestens einen Konnektor. Der Schutzstoff schließt die Leiterplatte mindestens teilweise, insbesondere vollständig, ein und hält diese. Insbesondere hält der Schutzstoff den Zellhalter in Bezug auf die Leiterplatte entlang der mindestens einen Quer-Richtung, insbesondere und der Zapfen-Richtung. Zusätzlich oder alternativ erstreckt sich bzw. steht der mindestens eine Tauchzapfen entlang der Zapfen-Richtung von den Akkumulatorzellen zu der Leiterplatte und bzw. aber nicht bis zu der Leiterplatte hin vor. Insbesondere kann die Leiterplatte starr bzw. unflexibel oder flexibel, insbesondere ausgebildet, sein. Insbesondere kann für den Begriff "flexible Leiterplatte" der Begriff "Leiterfolie" synonym verwendet werden. Zusätzlich oder alternativ kann die Leiterplatte innerhalb des Akkupackgehäuses, insbesondere an dem Akkupackgehäuse fest und/oder vollständig, angeordnet sein. Insbesondere kann der Schutzstoff die Leiterplatte in Bezug auf das Akkupackgehäuse halten, insbesondere entlang der mindestens einen Quer-Richtung und/oder der Zapfen-Richtung. Weiter zusätzlich oder alternativ kann eine Plattenfläche der Leiterplatte mit ihrer Flächennormalen nicht-orthogonal, insbesondere parallel, in Bezug auf die Zapfen-Richtung, insbesondere angeordnet, sein. Weiter zusätzlich oder alternativ kann die Leiterplatte beidseitig bestückt sein.

In einer Weiterbildung der Erfindung weist der Akkupack ein, insbesondere das, Akkupackgehäuse auf. Der Zellhalter, die Überwachungs- und/oder Kontroll-Elektronik und/oder -Sensorik und/oder der mindestens eine Konnektor und der Schutzstoff sind innerhalb des Akkupackgehäuses angeordnet. Der mindestens eine Tauchzapfen ist entlang der mindestens einen Quer-Richtung beabstandet zu dem Akkupackgehäuse, insbesondere angeordnet.

Zusätzlich oder alternativ ist der mindestens eine Tauchzapfen entlang der mindestens einen Quer-Richtung beabstandet zu einem Außenrand des mindestens einen Halteteils, soweit vorhanden, und/oder nah, insbesondere näher, zu einer Mitte der Außenfläche, insbesondere definiert durch das mindestens eine Halteteil, insbesondere angeordnet.

Weiter zusätzlich oder alternativ ist der mindestens eine Tauchzapfen entlang der mindestens einen Quer-Richtung beabstandet zu einem Außenrand der Überwachungs- und/oder Kontroll-Elektronik und/oder -Sensorik und/oder nah, insbesondere näher, zu einer Mitte der Überwachungs- und/oder Kontroll-Elektronik und/oder -Sensorik, insbesondere angeordnet.

Weiter zusätzlich oder alternativ ist der mindestens eine Tauchzapfen entlang der mindestens einen Quer-Richtung beabstandet zu einem Außen- bzw. Plattenrand der Leiterplatte, soweit vorhanden, und/oder nah, insbesondere näher, zu einer Mitte einer, insbesondere der, Außen- bzw. Plattenfläche der Leiterplatte, insbesondere angeordnet.

Dies ermöglicht ein Halten an einer effektiven Position und somit ein besonders gutes und somit besonders zuverlässiges Halten. Insbesondere kann für den Begriff "beabstandet" der Begriff "entfernt/er" synonym verwendet werden.

In einer Weiterbildung der Erfindung weist die Überwachungs- und/oder Kontroll-Elektronik und/oder -Sensorik eine, insbesondere formstabile, Sensoreinrichtung auf. Die Sensoreinrichtung erstreckt sich bzw. steht entlang der Zapfen-Richtung, insbesondere von der Leiterplatte, soweit vorhanden, bis in eine Sensoraussparung bzw. -aufnahme des Zellhalters hinein, insbesondere auf Höhe mindestens einer der Akkumulatorzellen, vor und ist zur Messung einer Eigenschaft, insbesondere eines Werts der Eigenschaft, der mindestens einen Akkumulatorzelle ausgebildet. Insbesondere taucht der mindestens eine Tauchzapfen in einem Bereich der Sensoreinrichtung, insbesondere die Sensoreinrichtung entlang der mindestens einen Quer-Richtung umfassend bzw. -schließend, in den Schutzstoff hinein. Dies, insbesondere das gute und somit zuverlässige Halten des Zellhalters in Bezug auf die Überwachungs- und/oder Kontroll-Elektronik und/oder -Sensorik entlang der mindestens einen Quer-Richtung, ermöglicht eine Reduzierung oder sogar eine Vermeidung eines Risikos einer Abscherung der Sensoreinrichtung bei einer Belastung des Akkupacks, insbesondere aufgrund eines Falls des Akkupacks. Insbesondere kann die Sensoreinrichtung starr bzw. unflexibel, insbesondere ausgebildet, sein. Zusätzlich oder alternativ kann die Sensoreinrichtung einen Thermistor mit negativen Temperaturkoeffizienten (kurz: NTC) aufweisen, insbesondere sein. Weiter zusätzlich oder alternativ kann die Eigenschaft eine Temperatur aufweisen, insbesondere sein. Weiter zusätzlich oder alternativ kann die Messung automatisch sein. Weiter zusätzlich oder alternativ kann für den Begriff "Messung" der Begriff "Erfassung" synonym verwendet werden. Weiter zusätzlich oder alternativ kann die Sensoreinrichtung aus dem Schutzstoff heraus auftauchen bzw. ragen bzw. stehen. Weiter zusätzlich oder alternativ kann der Schutzstoff die Sensoreinrichtung nur teilweise bzw. nicht vollständig einschließen. Weiter zusätzlich oder alternativ kann der Akkupack einen Abstandshalter (Englisch: spacer) aufweisen, wobei der Abstandshalter einen Abstand der Sensoreinrichtung und des Zellhalters voneinander hält. Dies ermöglicht eine Vermeidung einer Berührung der Sensoreinrichtung von dem Zellhalter. Insbesondere kann der Abstandshalter in Bezug auf die Leiterplatte Spiel haben, insbesondere ohne Schutzstoff.

In einer Weiterbildung der Erfindung weist der mindestens eine Tauchzapfen mindestens eine Hinterschneidung auf. Die mindestens eine Hinterschneidung taucht in den Schutzstoff derart, insbesondere weit, hinein, dass der Schutzstoff den Zellhalter in Bezug auf die Überwachungs- und/oder Kontroll-Elektronik und/oder -Sensorik und/oder den mindestens einen Konnektor entlang der Zapfen-Richtung hält, insbesondere durch einen Formschluss. Dies ermöglicht ein besonders gutes und somit besonders zuverlässiges Halten.

In einer Weiterbildung der Erfindung taucht der mindestens eine Tauchzapfen entlang der Zapfen-Richtung minimal 0,5 Millimeter (mm), insbesondere minimal 1,0 mm, insbesondere 1,5 mm, in den Schutzstoff hinein. Dies ermöglicht ein besonders gutes und somit besonders zuverlässiges Halten.

In einer Weiterbildung der Erfindung weisen die Akkumulatorzellen, insbesondere der Überwachungs- und/oder Kontroll-Elektronik und/oder -Sensorik und/oder dem mindestens einen Konnektor und/oder der Leiterplatte zugewandte, Zellkontakte auf. Der Schutzstoff reicht nicht bis zu den Zellkontakten hin. Insbesondere ist der Schutzstoff entlang der Zapfen-Richtung minimal 0,5 mm, insbesondere minimal 1,0 mm, insbesondere 1,5 mm, beabstandet zu den Zellkontakten, insbesondere angeordnet.

Zusätzlich oder alternativ weist der Akkupack mindestens einen, insbesondere der Überwachungs- und/oder Kontroll-Elektronik und/oder -Sensorik und/oder dem mindestens einen Konnektor und/oder der Leiterplatte zugewandten, Zellverbinder auf. Der mindestens eine Zellverbinder verbindet elektrisch die Akkumulatorzellen, insbesondere die Zellkontakte, insbesondere miteinander. Der Schutzstoff reicht nicht bis zu dem mindestens einen Zellverbinder hin. Insbesondere ist der Schutzstoff entlang der Zapfen-Richtung minimal 0,5 mm, insbesondere minimal 1,0 mm, insbesondere 1,5 mm, beabstandet zu dem mindestens einen Zellverbinder, insbesondere angeordnet.

Weiter zusätzlich oder alternativ weisen die Akkumulatorzellen, insbesondere der Überwachungs- und/oder Kontroll-Elektronik und/oder -Sensorik und/oder dem mindestens einen Konnektor und/oder der Leiterplatte zugewandte, Sicherheitsventile, insbesondere die Zellkontakte mit den Sicherheitsventilen, auf. Der Schutzstoff reicht nicht bis zu den Sicherheitsventilen hin. Insbesondere ist der Schutzstoff entlang der Zapfen-Richtung minimal 0,5 mm, insbesondere minimal 1,0 mm, insbesondere 1,5 mm, beabstandet zu den Sicherheitsventilen, insbesondere angeordnet.

Dies ermöglicht eine Vermeidung einer Berührung der Zellkontakte, des mindestens einen Zellverbinders und/oder der Sicherheitsventile von dem Schutzstoff einerseits und somit eine bestimmungsgemäße Funktion der Zellkontakte, des mindestens einen Zellverbinders und/oder der Sicherheitsventile und das Halten andererseits. Insbesondere kann für den Begriff "Zellkontakt" der Begriff "Zellterminal" und/oder "Zellpol" synonym verwendet werden. Zusätzlich oder alternativ kann der mindestens eine Zellverbinder die Akkumulatorzellen, insbesondere die Zellkontakte, unmittelbar und/oder durch Berührung elektrisch verbinden und/oder zusammenschalten, insbesondere parallel oder seriell. Weiter zusätzlich oder alternativ können Pluspole mit den Sicherheitsventilen sein. Weiter zusätzlich oder alternativ können die Sicherheitsventile Gasentweichungsöffnungen aufweisen.

In einer Weiterbildung der Erfindung sind die Akkumulatorzellen, insbesondere längliche, Rundzellen. Insbesondere sind die Rundzellen mit ihren Längsachsen nicht-orthogonal, insbesondere parallel, in Bezug auf die Zapfen-Richtung, insbesondere angeordnet. Insbesondere kann für den Begriff "länglich" der Begriff "prolat" synonym verwendet werden. Zusätzlich oder alternativ kann eine, insbesondere jeweilige, Länge der Rundzellen größer als ein, insbesondere jeweiliger, Durchmesser der Rundzellen sein. Weiter zusätzlich oder alternativ können die Zellkontakte und/oder die Sicherheitsventile an Stirnseiten der, insbesondere länglichen, Rundzellen, insbesondere angeordnet, sein.

In einer Weiterbildung der Erfindung weist der Akkupack ein Abdeckelement, insbesondere eine Abdeckplatte, auf. Das Abdeckelement ist zwischen den Akkumulatorzellen, insbesondere und dem mindestens einen Zellverbinder, einerseits und dem Schutzstoff und/oder der Überwachungs- und/oder Kontroll-Elektronik und/oder -Sensorik und/oder dem mindestens einen Konnektor andererseits angeordnet und weist mindestens eine Durchführungsöffnung auf. Der mindestens eine Tauchzapfen steht durch die Durchführungsöffnung hindurch vor. Insbesondere ist das Abdeckelement derart ausgebildet und deckt die Akkumulatorzellen, insbesondere und den mindestens einen Zellverbinder, derart ab, dass der Schutzstoff nicht bis zu den Akkumulatorzellen, insbesondere und dem mindestens einen Zellverbinder, hin reicht. Dies ermöglicht eine Vermeidung einer Berührung der Akkumulatorzellen, insbesondere und des mindestens einen Zellverbinders, von dem Schutzstoff einerseits und das Halten andererseits. Insbesondere kann die Abdeckplatte starr bzw. unflexibel oder flexibel, insbesondere ausgebildet, sein. Insbesondere kann für den Begriff "flexible Abdeckplatte" der Begriff "Abdeckfolie" synonym verwendet werden. Zusätzlich oder alternativ kann eine Plattenfläche der Abdeckplatte mit ihrer Flächennormalen nicht-orthogonal, insbesondere parallel, in Bezug auf die Zapfen-Richtung, insbesondere angeordnet, sein. Weiter zusätzlich oder alternativ kann das Abdeckelement innerhalb des Akkupackgehäuses, insbesondere an dem Akkupackgehäuse fest und/oder vollständig, angeordnet sein. Weiter zusätzlich kann das Abdeckelement zwischen dem Halteteil einerseits und/oder der Leiterplatte andererseits angeordnet sein. Weiter zusätzlich oder alternativ kann das Abdeckelement mindestens eine weitere Durchführungsöffnung aufweisen, wobei die Sensoreinrichtung durch die weitere Durchführungsöffnung hindurch vorsteht. Weiter zusätzlich oder alternativ kann das Abdeckelement für den Schutzstoff, insbesondere in einem nicht-ausgehärteten bzw. flüssigen Zustand, dicht bzw. undurchlässig sein. Weiter zusätzlich oder alternativ kann das Abdeckelement teilweise oder vollständig aus Schaumstoff, insbesondere Moosgummi, bestehen. Weiter zusätzlich oder alternativ kann das Abdeckelement auf den Zellhalter, insbesondere das Halteteil, aufgeklebt sein.

In einer Ausgestaltung der Erfindung ist das Abdeckelement zu einer Klemmung bzw. Kraftbeaufschlagung bzw. kraftschlüssigen Sicherung des Zellhalters und/oder des mindestens einen Zellverbinders und/oder des Schutzstoffes und/oder der Überwachungs- und/oder Kontroll-Elektronik und/oder -Sensorik und/oder des mindestens einen Konnektors kompressibel, insbesondere ausgebildet.

In einer Weiterbildung der Erfindung weist der Akkupack ein, insbesondere das, Akkupackgehäuse auf. Der Zellhalter, die Überwachungs- und/oder Kontroll-Elektronik und/oder -Sensorik und/oder der mindestens eine Konnektor und der Schutzstoff sind innerhalb des Akkupackgehäuses angeordnet. Das Akkupackgehäuse weist mindestens eine Auf- bzw. Anlagefläche auf. Insbesondere ist die mindestens eine Auflagefläche entlang der mindestens einen Quer-Richtung jenseits der Überwachungs- und/oder Kontroll-Elektronik und/oder - Sensorik und/oder dem mindestens einen Konnektor und/oder der Leiterplatte und/oder des Schutzstoffes angeordnet. Der Akkupack weist ein kompressibles Zwischenelement, insbesondere das Abdeckelement, auf. Der Zellhalter liegt entlang der Zapfen-Richtung auf bzw. an der Auflagefläche, insbesondere nur, mit dem Zwischenelement dazwischen auf bzw. an. Dies ermöglicht eine definierte Tauchtiefe, insbesondere entlang der Zapfen-Richtung, des mindestens einen Tauchzapfens in den Schutzstoff hinein. Zusätzlich oder alternativ ermöglicht dies eine Reduzierung oder sogar eine Vermeidung einer Übertragung einer Belastung auf das Akkupackgehäuse, insbesondere aufgrund eines Falls des Akkupacks, zu dem Zellhalter. Insbesondere kann das Zwischenelement eine Zwischenplatte aufweisen, insbesondere sein. Insbesondere kann eine Plattenfläche der Zwischenplatte mit ihrer Flächennormalen nicht-orthogonal, insbesondere parallel, in Bezug auf die Zapfen-Richtung, insbesondere angeordnet, sein. Zusätzlich oder alternativ kann das Zwischenelement innerhalb des Akkupackgehäuses, insbesondere an dem Akkupackgehäuse fest und/oder vollständig, angeordnet sein. Weiter zusätzlich oder alternativ kann das Halteteil, insbesondere mit der Außenfläche und/oder dem Außenrand, entlang der Zapfen-Richtung auf bzw. an der Auflagefläche, insbesondere nur, mit dem Zwischenelement dazwischen auf- bzw. anliegen. Weiter zusätzlich oder alternativ kann das Zwischenelement auf den Zellhalter, insbesondere das Halteteil, aufgeklebt sein. Weiter zusätzlich oder alternativ kann das Zwischenelement teilweise oder vollständig aus Schaumstoff, insbesondere Moosgummi, bestehen.

In einer Weiterbildung der Erfindung weist der Akkupack ein, insbesondere das, Akkupackgehäuse auf. Das Akkupackgehäuse weist ein Füllformteil auf. Die Überwachungs- und/oder Kontroll-Elektronik und/oder -Sensorik und/oder der mindestens eine Konnektor sind mindestens teilweise, insbesondere vollständig, innerhalb des Füllformteils angeordnet. Der Schutzstoff ist, insbesondere vollständig, in die Füllform eingefüllt. Der Akkupack weist ein Abdichtelement, insbesondere das Abdeckelement und/oder das kompressible Zwischenelement, auf. Das Abdichtelement ist derart ausgebildet und dichtet das Füllformteil derart ab, dass der Schutzstoff nicht jenseits des Füllformteils reicht, insbesondere entlang der der Zapfen-Richtung, insbesondere und der mindestens einen Quer-Richtung. Dies ermöglicht eine Vermeidung einer Berührung der Akkumulatorzellen, insbesondere und des mindestens einen Zellverbinders, von dem Schutzstoff einerseits und das Halten andererseits. Insbesondere kann das Akkupackgehäuse einen Gehäusedeckel aufweisen, wobei der Gehäusedeckel das Füllformteil aufweisen kann. Zusätzlich kann das Akkupackgehäuse einen Gehäusebehälter aufweisen, wobei der Gehäusebehälter und der Gehäusedeckel durcheinander verschlossen sein können, insbesondere entlang der Zapfen-Richtung. Insbesondere kann eine Öffnung des Gehäusedeckels, insbesondere des Füllformteils, dem Gehäusebehälter zugewandt sein und/oder eine Öffnung des Gehäusebehälters kann dem Gehäusedeckel, insbesondere dem Füllformteil, zugewandt sein. Weiter zusätzlich oder alternativ kann das Füllformteil entlang der mindestens einen Quer-Richtung durch die mindestens eine Auflagefläche definiert bzw. begrenzt sein. Weiter zusätzlich oder alternativ kann das Füllformteil ein Füllbecher, ein Füllwanne, eine Gießform und/oder ein Gießbecher, insbesondere ein Vergussbecher und/oder eine Vergusswanne, sein. Weiter zusätzlich oder alternativ kann der Schutzstoff in die Füllform entlang der Zapfen-Richtung eingefüllt und/oder eingegossen und/oder eingespritzt sein. Weiter zusätzlich oder alternativ kann die Leiterplatte mindestens teilweise, insbesondere vollständig, innerhalb des Füllformteils angeordnet sein. Weiter zusätzlich oder alternativ können/kann oder brauchen/braucht nicht die Akkumulatorzellen, das Halteteil und/oder die Zellverbinder innerhalb des Füllformteils angeordnet sein. Weiter zusätzlich oder alternativ kann das Abdichtelement innerhalb des Akkupackgehäuses, insbesondere an dem Akkupackgehäuse fest und/oder vollständig, angeordnet sein. Weiter zusätzlich oder alternativ kann das Abdichtelement eine Abdichtplatte aufweisen, insbesondere sein. Insbesondere kann eine Plattenfläche der Abdichtplatte mit ihrer Flächennormalen nicht-orthogonal, insbesondere parallel, in Bezug auf die Zapfen-Richtung, insbesondere angeordnet, sein. Weiter zusätzlich oder alternativ kann das Abdichtelement für den Schutzstoff, insbesondere in einem nicht-ausgehärteten bzw. flüssigen Zustand, dicht bzw. undurchlässig sein. Weiter zusätzlich oder alternativ kann das Abdichtelement teilweise oder vollständig aus Schaumstoff, insbesondere Moosgummi, bestehen. Weiter zusätzlich oder alternativ kann das Abdichtelement auf den Zellhalter, insbesondere das Halteteil, aufgeklebt sein.

In einer Weiterbildung der Erfindung weist der Akkupack ein, insbesondere das, Akkupackgehäuse auf. Der Zellhalter, die Überwachungs- und/oder Kontroll-Elektronik und/oder -Sensorik und/oder der mindestens eine Konnektor und der Schutzstoff sind innerhalb des Akkupackgehäuses angeordnet. Das Akkupackgehäuse weist mindestens ein Vorpositionierungselement auf. Insbesondere ist das mindestens eine Vorpositionierungselement entlang der mindestens einen Quer-Richtung jenseits der Überwachungs- und/oder Kontroll-Elektronik und/oder -Sensorik und/oder dem mindestens einen Konnektor und/oder der Leiterplatte und/oder dem Schutzstoff angeordnet. Das mindestens eine Vorpositionierungselement positioniert den Zellhalter in Bezug auf die Überwachungs- und/oder Kontroll-Elektronik und/oder -Sensorik und/oder den mindestens einen Konnektor entlang der mindestens einen Quer-Richtung, insbesondere zur Vermeidung einer Falschmontage, vor. Dies ermöglicht eine einfache und/oder schnelle Montage bzw. Herstellung des Akkupacks. Insbesondere kann oder braucht das mindestens eine Vorpositionierungselement nicht den Zellhalter, insbesondere in Bezug auf die Überwachungs- und/oder Kontroll-Elektronik und/oder -Sensorik und/oder den mindestens einen Konnektor entlang der mindestens einen Quer-Richtung, halten. Zusätzlich oder alternativ kann das mindestens eine Vorpositionierungselement entlang der mindestens einen Quer-Richtung jenseits der mindestens einen Auflagefläche angeordnet.

Das erfindungsgemäße Bearbeitungssystem weist einen, insbesondere den, Akkupack wie vorhergehend beschrieben und ein elektrisch angetriebenes, insbesondere das elektrisch angetriebene, Bearbeitungsgerät auf. Der Akkupack und das Bearbeitungsgerät sind zur elektrischen Verbindung miteinander zur Versorgung des Bearbeitungsgeräts mit elektrischer Antriebsleistung von dem Akkupack ausgebildet. Insbesondere kann das Bearbeitungssystem ein Garten-, Forst-, Bau- und/oder Bodenbearbeitungssystem sein. Zusätzlich oder alternativ kann das Bearbeitungsgerät eine Säge, insbesondere eine Kettensäge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere oder ein Hochdruckreiniger sein. Weiter zusätzlich oder alternativ kann das Bearbeitungsgerät ein handgeführtes, insbesondere bodengeführtes oder handgetragenes, Bearbeitungsgerät sein. Insbesondere handgeführtes, insbesondere handgetragenes, Bearbeitungsgerät kann bedeuten, dass das Bearbeitungsgerät eine Masse von maximal 50 Kilogramm (kg), insbesondere von maximal 20 kg, insbesondere von maximal 10 kg, insbesondere von maximal 5 kg, und/oder von minimal 1 kg, insbesondere von minimal 2 kg, aufweisen kann. Weiter zusätzlich oder alternativ kann das Bearbeitungsgerät einen Elektroantriebsmotor aufweisen. Weiter zusätzlich oder alternativ können der Akkupack und das Bearbeitungsgerät zur, insbesondere werkzeugfrei und/oder zerstörungsfrei, lösbaren elektrischen Verbindung miteinander ausgebildet sein, insbesondere mittels Steckverbinder. Weiter zusätzlich oder alternativ können der Akkupack und das Bearbeitungsgerät zur, insbesondere werkzeugfrei und/oder zerstörungsfrei, lösbaren mechanischen Verbindung miteinander ausgebildet sein. Insbesondere kann das Bearbeitungsgerät zum Tragen des Akkupacks ausgebildet sein. Insbesondere kann das Bearbeitungsgerät eine Akkuaufnahme, insbesondere einen Akkuschacht, aufweisen, wobei die Akkuaufnahme zum Aufnehmen des Akkupacks ausgebildet sein kann. Alternativ kann der Akkupack in das Bearbeitungsgerät integriert sein.

Das erfindungsgemäße Verfahren ist zur Herstellung bzw. Montage eines, insbesondere des, Akkupacks, insbesondere wie vorhergehend beschrieben, zur Versorgung eines, insbesondere des, elektrisch angetriebenen Bearbeitungsgeräts mit elektrischer Antriebsleistung ausgebildet bzw. vorgesehen. Das Verfahren weist die Schritte auf: a) mindestens teilweises Einschließen einer, insbesondere der, Überwachungs- und/oder Kontroll-Elektronik und/oder -Sensorik und/oder mindestens eines, insbesondere des mindestens einen, Konnektors mittels eines, insbesondere des, Schutzstoffes in einem, insbesondere dem, nicht-ausgehärteten bzw. flüssigen Zustand. Die Überwachungs- und/oder Kontroll-Elektronik und/oder -Sensorik und/oder der mindestens eine Konnektor sind/ist zur Überwachung und/oder Kontrolle und/oder Messung und/oder Kontaktierung von, insbesondere den, Akkumulatorzellen ausgebildet. b) Anordnen eines, insbesondere des, Zellhalters, wobei der Zellhalter die Akkumulatorzellen hält und mindestens einen, insbesondere den mindestens einen, Tauchzapfen aufweist, derart, dass der mindestens eine Tauchzapfen entlang einer, insbesondere der, Zapfen-Richtung von den Akkumulatorzellen zu der Überwachungs- und/oder Kontroll-Elektronik und/oder -Sensorik und/oder dem mindestens einen Konnektor derart vorsteht, dass der mindestens eine Tauchzapfen in den Schutzstoff in einem, insbesondere dem, nicht-ausgehärteten bzw. flüssigen Zustand hinein taucht. c) Aushärten des Schutzstoffes in einen, insbesondere den, ausgehärteten Zustand derart, dass der Schutzstoff die Überwachungs- und/oder Kontroll-Elektronik und/oder -Sensorik und/oder den mindestens einen Konnektor hält, und dass der Schutzstoff den Zellhalter in Bezug auf die Überwachungs- und/oder Kontroll-Elektronik und/oder -Sensorik und/oder den mindestens einen Konnektor entlang mindestens einer, insbesondere der mindestens einen, Quer-Richtung quer in Bezug auf die Zapfen-Richtung hält. Insbesondere kann der Schritt b) zeitlich nach dem Schritt a) ausgeführt werden. Zusätzlich oder alternativ kann der Schritt c) zeitlich nach dem Schritt b) ausgeführt werden. Weiter zusätzlich oder alternativ kann das Verfahren, insbesondere zeitlich vor dem Schritt a), den Schritt aufweisen: Anordnen der Überwachungs- und/oder Kontroll-Elektronik und/oder - Sensorik und/oder des mindestens einen Konnektors innerhalb eines, insbesondere des, Akkupackgehäuses. Weiter zusätzlich oder alternativ kann das Verfahren, insbesondere der Schritt a), den Schritt aufweisen: Anordnen des Schutzstoffes in dem nicht-ausgehärtetem Zustand innerhalb des Akkupackgehäuses, insbesondere entlang der Zapfen-Richtung. Weiter zusätzlich oder alternativ kann das Verfahren, insbesondere der Schritt b), den Schritt aufweisen: Anordnen des Zellhalters innerhalb des Akkupackgehäuses, insbesondere entlang der Zapfen-Richtung.

In einer Weiterbildung der Erfindung weist das Verfahren zeitlich nach dem Schritt a) und zeitlich vor dem Schritt b) den Schritt auf: Anhärten des Schutzstoffes, insbesondere derart, dass sich eine Viskosität des Schutzstoffes mindestens verdoppelt.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: eine Perspektivansicht eines erfindungsgemäßen Bearbeitungssystems aufweisend einen erfindungsgemäßen Akkupack und ein elektrisch angetriebenes Bearbeitungsgerät,
- Fig. 2: eine Längsschnittansicht des Akkupacks der Fig. 1 aufweisend eine Überwachungs- und/oder Kontroll-Elektronik und/oder -Sensorik und eines erfindungsgemäßen Verfahrens zur Herstellung des Akkupacks,
- Fig. 3: eine Draufsicht eines Teils des Akkupacks der Fig. 1 ohne Schutzstoff und des Verfahrens,
- Fig. 4: eine Draufsicht des Teils der Fig. 3 mit Schutzstoff und des Verfahrens,
- Fig. 5: eine Perspektivansicht eines Zellhalters haltend Akkumulatorzellen, eines Zellverbinders und eines Abdeckelements bzw. eines kompressiblen Zwischenelements bzw. eines Abdichtelements des Akkupacks der Fig. 1,
- Fig. 6: eine Perspektivansicht des Zellhalters der Fig. 5,
- Fig. 7: eine Querschnittansicht des Akkupacks der Fig. 1 und des Verfahrens,
- Fig. 8: eine weitere Längsschnittansicht des Akkupacks der Fig. 1 und des Verfahrens,
- Fig. 9: eine weitere Längsschnittansicht des Akkupacks der Fig. 1 und des Verfahrens, und
- Fig. 10: eine weitere Längsschnittansicht des Akkupacks der Fig. 1 aufweisend mindestens einen Konnektor und des Verfahrens.

### DETAILLIERTE BESCHREIBUNG DER AUSFÜHRUNGSBEISPIELE

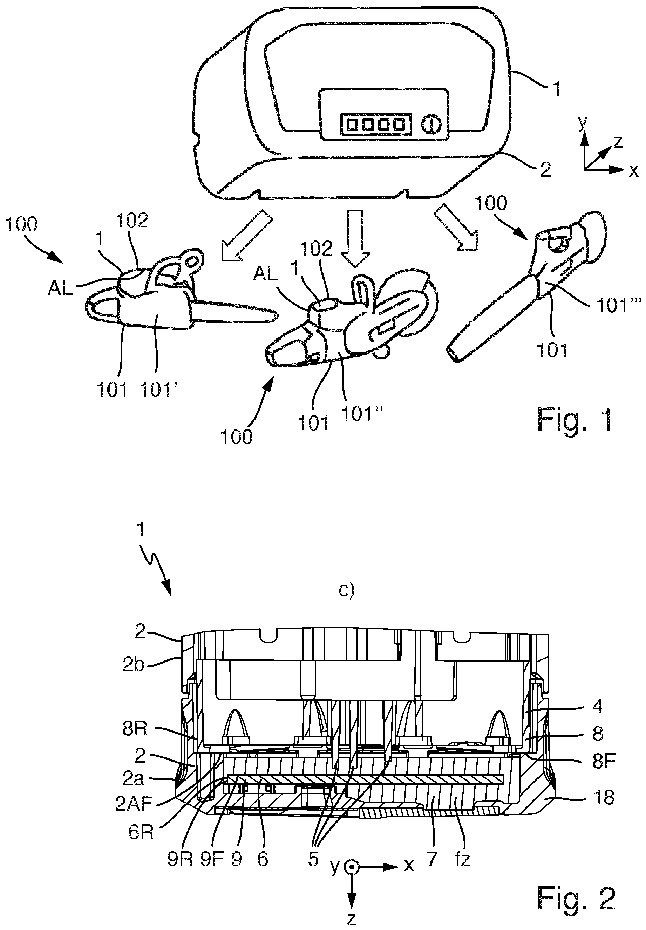

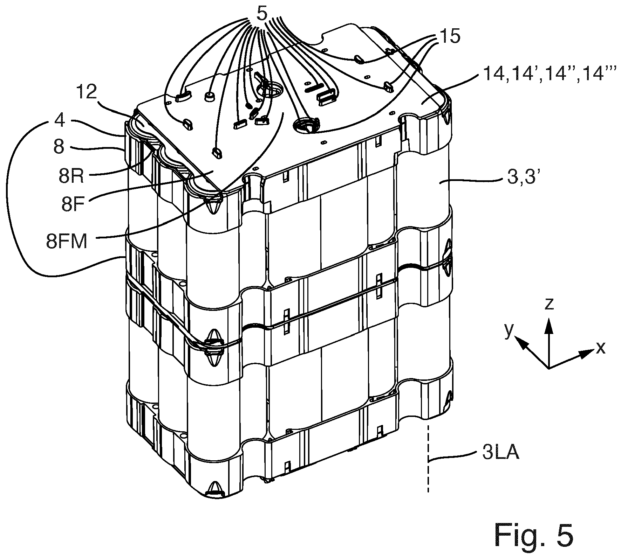

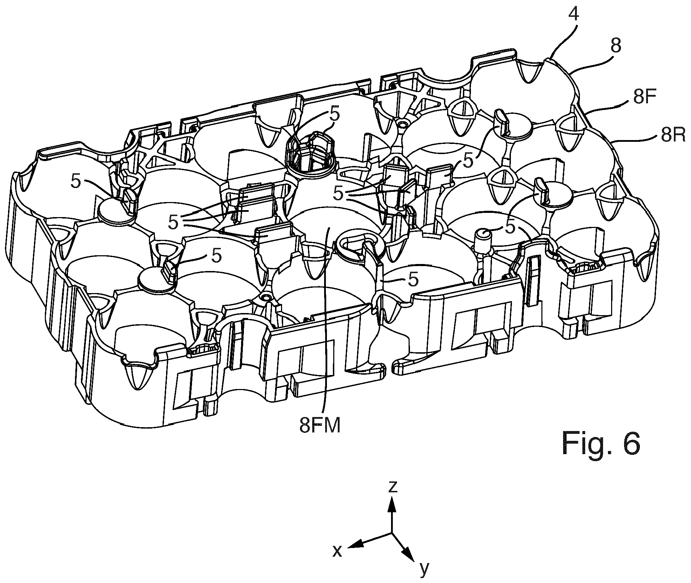

Fig. 1 bis 4 und 7 bis 10 zeigen einen erfindungsgemäßen Akkupack 1 zur Versorgung eines elektrisch angetriebenen Bearbeitungsgeräts 101 mit elektrischer Antriebsleistung AL und ein erfindungsgemäßes Verfahren zur Herstellung des Akkupacks 1. Der Akkupack 1 weist Akkumulatorzellen 3, einen Zellhalter 4, eine Überwachungs- und/oder Kontroll-Elektronik und/oder -Sensorik und/oder mindestens einen Konnektor 6 und einen Schutzstoff 7 auf, wie in Fig. 5 und 6 gezeigt. Der Zellhalter 4 hält die Akkumulatorzellen 3 und weist mindestens einen Tauchzapfen 5 auf. Die Überwachungs- und/oder Kontroll-Elektronik und/oder -Sensorik und/oder der mindestens eine Konnektor 6 sind/ist zur Überwachung und/oder Kontrolle und/oder Messung und/oder Kontaktierung der Akkumulatorzellen 3, insbesondere überwachen und/oder kontrollieren und/oder messen und/oder kontaktieren. Der Schutzstoff 7 schließt die Überwachungs- und/oder Kontroll-Elektronik und/oder -Sensorik und/oder den mindestens einen Konnektor 6 mindestens teilweise ein und hält diese/n. Der mindestens eine Tauchzapfen 5 steht entlang einer Zapfen-Richtung z von den Akkumulatorzellen 3 zu der Überwachungs- und/oder Kontroll-Elektronik und/oder -Sensorik und/oder dem mindestens einen Konnektor 6 derart vor, dass der mindestens eine Tauchzapfen 5 in den Schutzstoff 7 derart hinein taucht, dass der Schutzstoff 7 den Zellhalter 4 in Bezug auf die Überwachungs- und/oder Kontroll-Elektronik und/oder -Sensorik und/oder den mindestens einen Konnektor 6 entlang mindestens einer Quer-Richtung x, y, in dem gezeigten Ausführungsbeispiel zwei Quer-Richtungen x, y, quer in Bezug auf die Zapfen-Richtung z hält.

In dem gezeigten Ausführungsbeispiel weist der Akkupack 1 mehrere Akkumulatorzellen 3 auf. In alternativen Ausführungsbeispielen kann der Akkupack mindestens zwei, insbesondere mindestens fünf, insbesondere mindestens zehn, Akkumulatorzellen aufweisen.

Zusätzlich weist in dem gezeigten Ausführungsbeispiel der Zellhalter 4 mehrere Tauchzapfen 5 auf. In alternativen Ausführungsbeispielen kann der Zellhalter mindestens zwei, insbesondere mindestens fünf, insbesondere mindestens zehn, Tauchzapfen aufweisen.

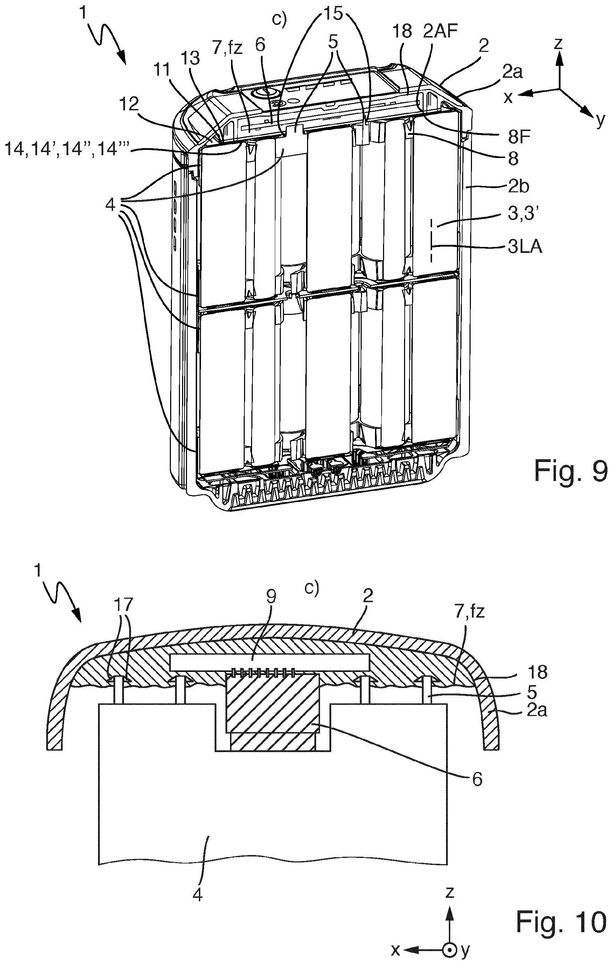

Weiter zusätzlich weist in dem Ausführungsbeispiel gezeigt in Fig. 10 der Akkupack 1 nur einen einzigen Konnektor 6 auf. In alternativen Ausführungsbeispielen kann der Akkupack mindestens zwei, insbesondere mindestens fünf, insbesondere mindestens zehn, Konnektoren aufweisen.

Im Detail weist der Zellhalter 4 mindestens ein, insbesondere quaderförmiges, Halteteil 8 auf, wie in Fig. 2, 5, 6, 8 und 9 gezeigt. Das mindestens eine Halteteil 8 hält die Akkumulatorzellen 3. Der mindestens eine Tauchzapfen 5 steht von dem mindestens einen, in dem gezeigten Ausführungsbeispiel nur einem, Halteteil 8, insbesondere einer Außenfläche 8F definiert durch das mindestens eine Halteteil 8, vor.

Des Weiteren weist der Akkupack 1 eine Leiterplatte 9 auf, wie in Fig. 2, 3 und 8 bis 10 gezeigt. Die Leiterplatte 9 trägt die Überwachungs- und/oder Kontroll-Elektronik und/oder -Sensorik und/oder den mindestens einen Konnektor 6. Der Schutzstoff 7 schließt die Leiterplatte 9 mindestens teilweise ein und hält diese. Insbesondere hält der Schutzstoff 7 den Zellhalter 4 in Bezug auf die Leiterplatte 9 entlang der mindestens einen Quer-Richtung x, y, in dem gezeigten Ausführungsbeispiel zwei Quer-Richtungen x, y. Zusätzlich oder alternativ steht der mindestens eine Tauchzapfen 5 entlang der Zapfen-Richtung z von den Akkumulatorzellen 3 zu der Leiterplatte 9 und nicht bis zu der Leiterplatte 9 hin vor.

In dem gezeigten Ausführungsbeispiel ist der mindestens eine Tauchzapfen 5 entlang der Zapfen-Richtung z 1,3 mm beabstandet zu der Leiterplatte 9.

Außerdem weist der Akkupack 1 ein Akkupackgehäuse 2 auf. Der Zellhalter 4, die Überwachungs- und/oder Kontroll-Elektronik und/oder -Sensorik und/oder der mindestens eine Konnektor 6 und der Schutzstoff 7 sind innerhalb des Akkupackgehäuses 2 angeordnet. Zusätzlich ist der mindestens eine Tauchzapfen 5 entlang der mindestens einen Quer-Richtung x, y, in dem gezeigten Ausführungsbeispiel zwei Quer-Richtungen x, y, beabstandet zu dem Akkupackgehäuse 2.

Zusätzlich oder alternativ ist der mindestens eine Tauchzapfen 5 entlang der mindestens einen Quer-Richtung x, y, in dem gezeigten Ausführungsbeispiel zwei Quer-Richtungen x, y, beabstandet zu einem Außenrand 8R des mindestens einen Halteteils 8 und/oder nah zu einer Mitte 8FM der Außenfläche 8F.

Weiter zusätzlich oder alternativ ist der mindestens eine Tauchzapfen 5 entlang der mindestens einen Quer-Richtung x, y, in dem gezeigten Ausführungsbeispiel zwei Quer-Richtungen x, y, beabstandet zu einem Außenrand 6R der Überwachungs- und/oder Kontroll-Elektronik und/oder -Sensorik 6 und/oder nah zu einer Mitte 6M der Überwachungs- und/oder Kontroll-Elektronik und/oder -Sensorik 6.

Weiter zusätzlich oder alternativ ist der mindestens eine Tauchzapfen 5 entlang der mindestens einen Quer-Richtung x, y, in dem gezeigten Ausführungsbeispiel zwei Quer-Richtungen x, y, beabstandet zu einem Außenrand 9R der Leiterplatte 9 und/oder nah zu einer Mitte 9FM einer Außenfläche 9F der Leiterplatte 9.

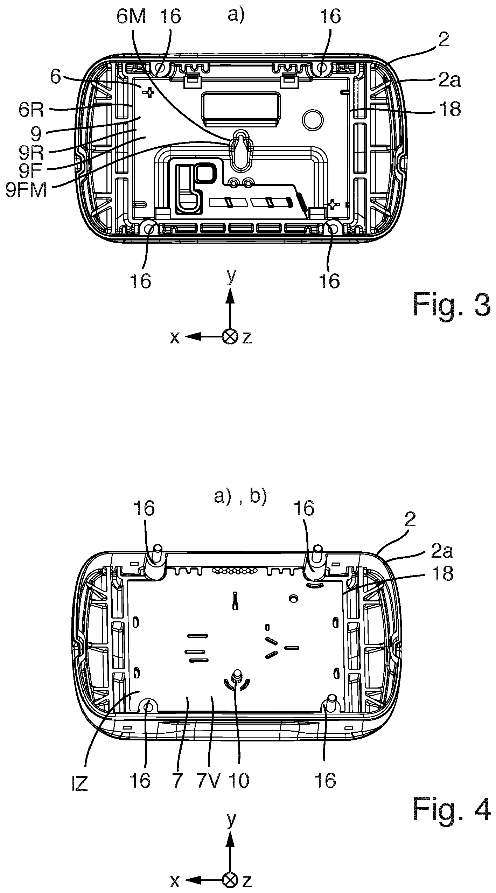

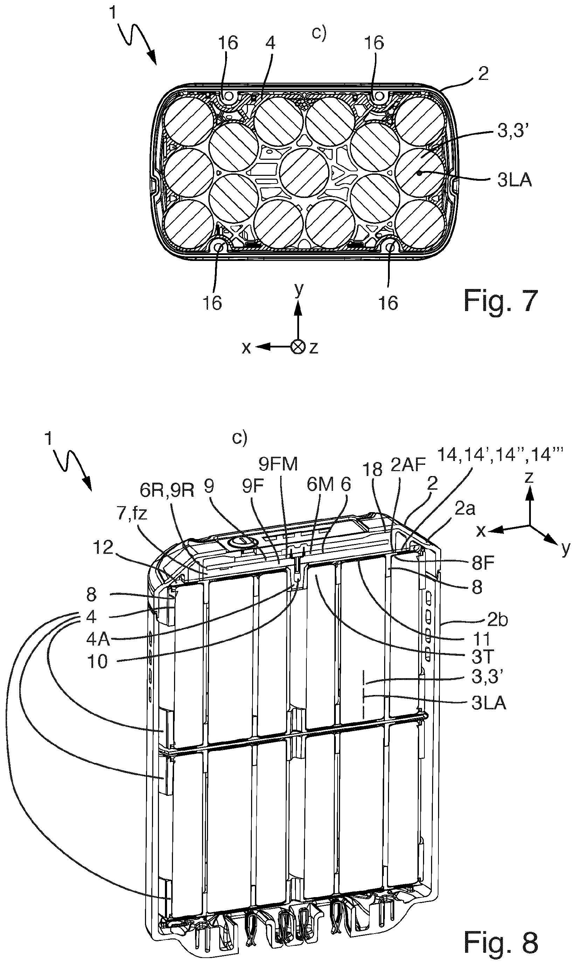

Zudem weist die Überwachungs- und/oder Kontroll-Elektronik und/oder -Sensorik 6 eine, insbesondere formstabile, Sensoreinrichtung 10 auf, wie in Fig. 4 und 8 gezeigt. Die Sensoreinrichtung 10 steht entlang der Zapfen-Richtung z, insbesondere von der Leiterplatte 9, bis in eine Sensoraussparung 4A des Zellhalters 4 hinein, insbesondere auf Höhe mindestens einer der Akkumulatorzellen 3, vor und ist zur Messung einer Eigenschaft 3T der mindestens einen Akkumulatorzelle 3 ausgebildet, insbesondere misst. Insbesondere taucht der mindestens eine Tauchzapfen 5 in einem Bereich der Sensoreinrichtung 10, insbesondere die Sensoreinrichtung 10 entlang der mindestens einen Quer-Richtung x, y umfassend, in den Schutzstoff 7 hinein.

Des Weiteren weist der mindestens eine Tauchzapfen 5 mindestens eine Hinterschneidung 17 auf, wie in Fig. 10 gezeigt. Die mindestens eine Hinterschneidung 17 taucht in den Schutzstoff 7 derart hinein, dass der Schutzstoff 7 den Zellhalter 4 in Bezug auf die Überwachungs- und/oder Kontroll-Elektronik und/oder -Sensorik und/oder den mindestens einen Konnektor 6 entlang der Zapfen-Richtung z hält.

Außerdem taucht der mindestens eine Tauchzapfen 5 entlang der Zapfen-Richtung z minimal 0,5 mm, in dem gezeigten Ausführungsbeispiel 1,5 mm, in den Schutzstoff 7 hinein.

Weiter weisen die Akkumulatorzellen 3, insbesondere der Überwachungs- und/oder Kontroll-Elektronik und/oder -Sensorik und/oder dem mindestens einen Konnektor 6 und/oder der Leiterplatte 9 zugewandte, Zellkontakte 11 auf, wie in Fig. 8 und 9 gezeigt. Der Schutzstoff 7 reicht nicht bis zu den Zellkontakten 11 hin. Insbesondere ist der Schutzstoff 7 entlang der Zapfen-Richtung z minimal 0,5 mm beabstandet zu den Zellkontakten 11.

Zusätzlich oder alternativ weist der Akkupack 1 mindestens einen, insbesondere der Überwachungs- und/oder Kontroll-Elektronik und/oder -Sensorik und/oder dem mindestens einen Konnektor 6 und/oder der Leiterplatte 9 zugewandten, Zellverbinder 12 auf. Der mindestens eine Zellverbinder 12 verbindet elektrisch die Akkumulatorzellen 3, insbesondere die Zellkontakte 11. Der Schutzstoff 7 reicht nicht bis zu dem mindestens einen Zellverbinder 12 hin. Insbesondere ist der Schutzstoff 7 entlang der Zapfen-Richtung z minimal 0,5 mm beabstandet zu dem mindestens einen Zellverbinder 12.

Weiter zusätzlich oder alternativ weisen die Akkumulatorzellen 3, insbesondere der Überwachungs- und/oder Kontroll-Elektronik und/oder -Sensorik und/oder dem mindestens einen Konnektor 6 und/oder der Leiterplatte 9 zugewandte, Sicherheitsventile 13, insbesondere die Zellkontakte 11 mit den Sicherheitsventilen 13, auf. Der Schutzstoff 7 reicht nicht bis zu den Sicherheitsventilen 13 hin. Insbesondere ist der Schutzstoff 7 entlang der Zapfen-Richtung z minimal 0,5 mm beabstandet zu den Sicherheitsventilen 13.

In dem gezeigten Ausführungsbeispiel sind die Akkumulatorzellen 3, insbesondere längliche, Rundzellen 3'. Insbesondere sind die Rundzellen 3' mit ihren Längsachsen 3LA nicht-orthogonal, insbesondere parallel, in Bezug auf die Zapfen-Richtung z. In alternativen Ausführungsbeispielen können die Rundzellen mit ihren Längsachsen nicht-parallel, insbesondere orthogonal, in Bezug auf die Zapfen-Richtung sein.

Zudem weist der Akkupack 1 ein Abdeckelement 14, insbesondere eine Abdeckplatte 14', auf, wie in Fig. 5, 8 und 9 gezeigt. Das Abdeckelement 14 ist zwischen den Akkumulatorzellen 3, insbesondere und dem mindestens einen Zellverbinder 12, einerseits und dem Schutzstoff 7 und/oder der Überwachungs- und/oder Kontroll-Elektronik und/oder -Sensorik und/oder dem mindestens einen Konnektor 6 andererseits angeordnet und weist mindestens eine Durchführungsöffnung 15 auf. Der mindestens eine Tauchzapfen 5 steht durch die Durchführungsöffnung 15 hindurch vor. Insbesondere ist das Abdeckelement 14 derart ausgebildet und deckt die Akkumulatorzellen 3, insbesondere und den mindestens einen Zellverbinder 12, derart ab, insbesondere bei der Herstellung des Akkupacks 1, dass der Schutzstoff 7 nicht bis zu den Akkumulatorzellen 3, insbesondere und dem mindestens einen Zellverbinder 12, hin reicht.

Des Weiteren weist das Akkupackgehäuse 2 mindestens eine Auflagefläche 2AF auf, wie in Fig. 2, 8 und 9 gezeigt. Insbesondere ist die mindestens eine Auflagefläche 2AF entlang der mindestens einen Quer-Richtung x, y, in dem gezeigten Ausführungsbeispiel zwei Quer-Richtungen x, y, jenseits der Überwachungs- und/oder Kontroll-Elektronik und/oder -Sensorik und/oder dem mindestens einen Konnektor 6 und/oder der Leiterplatte 9 und/oder des Schutzstoffes 7 angeordnet. Der Akkupack 1 weist ein kompressibles Zwischenelement 14", insbesondere das Abdeckelement 14, auf. Der Zellhalter 4 liegt entlang der Zapfen-Richtung z auf der Auflagefläche 2AF, insbesondere nur, mit dem Zwischenelement 14" dazwischen auf.

In dem gezeigten Ausführungsbeispiel ist das Zwischenelement 14" entlang der Zapfen-Richtung z zu 0,15 mm komprimiert.

Außerdem weist das Akkupackgehäuse ein Füllformteil 18 auf, wie in Fig. 2 bis 4 und 8 bis 10 gezeigt. Die Überwachungs- und/oder Kontroll-Elektronik und/oder -Sensorik und/oder der mindestens eine Konnektor 6 sind mindestens teilweise innerhalb des Füllformteils 18 angeordnet. Der Schutzstoff 7 ist in die Füllform 18 eingefüllt. Der Akkupack 1 weist ein Abdichtelement 14‴, insbesondere das Abdeckelement 14 und/oder das kompressible Zwischenelement 14ʺ, auf. Das Abdichtelement 14‴ ist derart ausgebildet und dichtet das Füllformteil 18 derart ab, insbesondere von oben und/oder bei der Herstellung des Akkupacks 1, dass der Schutzstoff 7 nicht jenseits des Füllformteils 18 reicht.

In dem gezeigten Ausführungsbeispiel ist der Schutzstoff 7 entlang der Zapfen-Richtung z 0,4 mm bis 0,85 mm beabstandet zu einer oberen Kante bzw. Grenze des Füllformteils 18.

Weiter weist das Akkupackgehäuse 2 mindestens ein Vorpositionierungselement 16 auf, wie in Fig. 3, 4 und 7 gezeigt. Insbesondere ist das mindestens eine Vorpositionierungselement 16 entlang der mindestens einen Quer-Richtung x, y, in dem gezeigten Ausführungsbeispiel zwei Quer-Richtungen x, y, jenseits der Überwachungs- und/oder Kontroll-Elektronik und/oder - Sensorik und/oder dem mindestens einen Konnektor 6 und/oder der Leiterplatte 9 und/oder dem Schutzstoff 7 angeordnet. Das mindestens eine Vorpositionierungselement 16 positioniert den Zellhalter 4 in Bezug auf die Überwachungs- und/oder Kontroll-Elektronik und/oder - Sensorik und/oder den mindestens einen Konnektor 6 entlang der mindestens einen Quer-Richtung x, y, in dem gezeigten Ausführungsbeispiel zwei Quer-Richtungen x, y, insbesondere zur Vermeidung einer Falschmontage, vor.

Das Verfahren weist die Schritte auf: a) mindestens teilweises Einschließen der Überwachungs- und/oder Kontroll-Elektronik und/oder -Sensorik und/oder des mindestens einen Konnektors 6 mittels des Schutzstoffes 7 in dem nicht-ausgehärteten Zustand IZ, wie in Fig. 3 und 4 gezeigt. b) Anordnen des Zellhalters 4 derart, dass der mindestens eine Tauchzapfen 5 entlang der Zapfen-Richtung z von den Akkumulatorzellen 3 zu der Überwachungs- und/oder Kontroll-Elektronik und/oder -Sensorik und/oder dem mindestens einen Konnektor 6 derart vorsteht, dass der mindestens eine Tauchzapfen 5 in den Schutzstoff 7 in dem nicht-ausgehärteten Zustand IZ hinein taucht, wie in Fig. 4 gezeigt. c) Aushärten des Schutzstoffes 7 in einen ausgehärteten Zustand fZ derart, dass der Schutzstoff 7 die Überwachungs- und/oder Kontroll-Elektronik und/oder -Sensorik und/oder den mindestens einen Konnektor 6 hält, und dass der Schutzstoff 7 den Zellhalter 4 in Bezug auf die Überwachungs- und/oder Kontroll-Elektronik und/oder -Sensorik und/oder den mindestens einen Konnektor 6 entlang der mindestens einen Quer-Richtung x,y quer in Bezug auf die Zapfen-Richtung z hält, wie in Fig. 2 und 7 bis 10 gezeigt.

Im Detail weist weist das Verfahren zeitlich nach dem Schritt a) und zeitlich vor dem Schritt b) den Schritt auf: Anhärten des Schutzstoffes 7, insbesondere derart, dass sich eine Viskosität 7V des Schutzstoffes 7 mindestens verdoppelt, wie in Fig. 4 gezeigt.

In dem gezeigten Ausführungsbeispiel weist das Akkupackgehäuse 2 einen Gehäusedeckel 2a und einen Gehäusebehälter 2b auf. Der Gehäusedeckel 2a weist das Füllformteil 18 auf.

Das Verfahren weist den Schritt auf, insbesondere zeitlich vor dem Schritt a): Anordnen der Überwachungs- und/oder Kontroll-Elektronik und/oder -Sensorik und/oder des mindestens einen Konnektors 6, insbesondere und der Leiterplatte 9, innerhalb des Akkupackgehäuses 2, insbesondere des Füllformteils 18, insbesondere aufgewiesen von dem Gehäusedeckel 2a und/oder nicht durch den Gehäusebehälter 2b verschlossen.

Insbesondere zeitlich danach, Ausführen des Schritts a), insbesondere aufweisend den Schritt: Anordnen des Schutzstoffes 7 in dem nicht-ausgehärtetem Zustand IZ innerhalb des Akkupackgehäuses 2, insbesondere Einfüllen des Schutzstoffes 7 in die Füllform 18, insbesondere entlang der Zapfen-Richtung z und/oder von oben nach unten und/oder aufgewiesen von dem Gehäusedeckel 2a mit seiner Öffnung nach oben ausgerichtet.

Insbesondere zeitlich danach, Anhärten des Schutzstoffes 7, insbesondere derart, dass sich die Viskosität 7V des Schutzstoffes 7 mindestens verdoppelt.

Insbesondere zeitlich danach, Ausführen des Schritts b), insbesondere aufweisend den Schritt: Anordnen des Zellhalters 4, insbesondere mit dem Abdeckelement 14 bzw. dem kompressiblen Zwischenelement 14ʺ bzw. dem Abdichtelement 14‴, insbesondere aufgeklebt, innerhalb des Akkupackgehäuses 2, insbesondere teilweise innerhalb des Gehäusedeckels 2a aufweisend den Füllformteil 18, insbesondere entlang der Zapfen-Richtung z und/oder von oben nach unten. Dies bis der Zellhalter 4 entlang der Zapfen-Richtung z auf der Auflagefläche 2AF mit dem Zwischenelement 14" dazwischen aufliegt und/oder wobei der Zellhalter 4 durch das mindestens eine Vorpositionierungselement 16 in Bezug auf die Überwachungs- und/oder Kontroll-Elektronik und/oder -Sensorik und/oder den mindestens einen Konnektor 6 entlang der mindestens einen Quer-Richtung x, y vorpositioniert wird.

Insbesondere zeitlich danach, weist das Verfahren den Schritt auf: Verschließen des Gehäusedeckels 2a durch den Gehäusebehälter 2b, insbesondere entlang der Zapfen-Richtung z und/oder von oben nach unten.

Insbesondere zeitlich danach, Ausführen des Schritts c).

Des Weiteren sind in dem gezeigten Ausführungsbeispiel die Überwachungs- und/oder Kontroll-Elektronik und/oder -Sensorik und/oder den mindestens einen Konnektor 6, insbesondere und die Leiterplatte 9, durch den Schutzstoff 7 in einem gemeinsamen Block, insbesondere Vergussblock, mindestens teilweise eingeschlossen.

Außerdem ist in dem gezeigten Ausführungsbeispiel eine eintauchende Stirnfläche des mindestens einen Tauchzapfens 5, wie in Fig. 5 und 6 gezeigt, minimal 1 Prozent (%), insbesondere minimal 2 %, und/oder maximal 10 %, insbesondere maximal 5 %, einer gesamten Oberfläche des Schutzstoffes 7, insbesondere einer Vergussoberfläche, wie in Fig. 4 gezeigt. Insbesondere ist die eintauchende Stirnfläche des mindestens einen Tauchzapfens 5 ca. 90 mm² und/oder die gesamte Oberfläche des Schutzstoffes 7 ist ca. 3900 mm².

Fig. 1 zeigt ein erfindungsgemäßes Bearbeitungssystem 100. Das Bearbeitungssystem 100 weist den Akkupack 1 das elektrisch angetriebene Bearbeitungsgerät 101 auf. Der Akkupack 1 und das Bearbeitungsgerät 100 sind zur elektrischen Verbindung miteinander zur Versorgung des Bearbeitungsgeräts 100 mit elektrischer Antriebsleistung AL von dem Akkupack 1 ausgebildet, insbesondere elektrisch verbunden.

Im Detail weist das Bearbeitungsgerät 100 eine Akkuaufnahme 102 auf. Die Akkuaufnahme 102 ist zum Aufnehmen des Akkupacks 1 ausgebildet, insbesondere nimmt auf.

In dem gezeigten Ausführungsbeispiel ist das Bearbeitungsgerät 101 eine Säge 101', ein Trennschleifer 101ʺ oder ein Blasgerät/Laubbläser 101‴. In alternativen Ausführungsbeispielen kann das Bearbeitungsgerät ein Hoch-Entaster, ein Freischneider, eine Heckenschere, ein Heckenschneider, eine Astschere, ein Kehrgerät, eine Kehrwalze, eine Kehrbürste, ein Rasenmäher, ein Vertikutierer, eine Grasschere oder ein Hochdruckreiniger sein.

Wie die gezeigten und oben erläuterten Ausführungsbeispiele deutlich machen, stellt die Erfindung einen vorteilhaften Akkupack zur Versorgung eines elektrisch angetriebenen Bearbeitungsgeräts mit elektrischer Antriebsleistung, ein vorteilhaftes Bearbeitungssystem aufweisend einen solchen Akkupack und ein elektrisch angetriebenes Bearbeitungsgerät und ein vorteilhaftes Verfahren zur Herstellung eines solchen Akkupacks bereit, wobei der Akkupack und das Verfahren und somit das Bearbeitungssystem verbesserte Eigenschaften aufweisen.

## Patentansprüche

1. Akkupack (1) zur Versorgung eines elektrisch angetriebenen Bearbeitungsgeräts (101) mit elektrischer Antriebsleistung (AL), wobei der Akkupack (1) aufweist:
- Akkumulatorzellen (3),
- einen Zellhalter (4), wobei der Zellhalter (4) die Akkumulatorzellen (3) hält und mindestens einen Tauchzapfen (5) aufweist,
- eine Überwachungs- und/oder Kontroll-Elektronik und/oder -Sensorik und/oder mindestens einen Konnektor (6), wobei die Überwachungs- und/oder Kontroll-Elektronik und/oder -Sensorik und/oder der mindestens eine Konnektor (6) zur Überwachung und/oder Kontrolle und/oder Messung und/oder Kontaktierung der Akkumulatorzellen (3) ausgebildet sind/ist, und
- einen Schutzstoff (7), wobei der Schutzstoff (7) die Überwachungs- und/oder Kontroll-Elektronik und/oder -Sensorik und/oder den mindestens einen Konnektor (6) mindestens teilweise einschließt und hält,
- wobei der mindestens eine Tauchzapfen (5) entlang einer Zapfen-Richtung (z) von den Akkumulatorzellen (3) zu der Überwachungs- und/oder Kontroll-Elektronik und/oder - Sensorik und/oder dem mindestens einen Konnektor (6) derart vorsteht, dass der mindestens eine Tauchzapfen (5) in den Schutzstoff (7) derart hinein taucht, dass der Schutzstoff (7) den Zellhalter (4) in Bezug auf die Überwachungs- und/oder Kontroll-Elektronik und/oder -Sensorik und/oder den mindestens einen Konnektor (6) entlang mindestens einer Quer-Richtung (x, y) quer in Bezug auf die Zapfen-Richtung (z) hält.

2. Akkupack (1) nach dem vorhergehenden Anspruch,
- wobei der Zellhalter (4) mindestens ein, insbesondere quaderförmiges, Halteteil (8) aufweist, wobei das mindestens eine Halteteil (8) die Akkumulatorzellen (3) hält, und
- wobei der mindestens eine Tauchzapfen (5) von dem mindestens einen Halteteil (8), insbesondere einer Außenfläche (8F) definiert durch das mindestens eine Halteteil (8), vorsteht.

3. Akkupack (1) nach einem der vorhergehenden Ansprüche,
- wobei der Akkupack (1) eine Leiterplatte (9) aufweist, wobei die Leiterplatte die Überwachungs- und/oder Kontroll-Elektronik und/oder -Sensorik und/oder den mindestens einen Konnektor (6) trägt, und
- wobei der Schutzstoff (7) die Leiterplatte (9) mindestens teilweise einschließt und hält,
- insbesondere wobei der Schutzstoff (7) den Zellhalter (4) in Bezug auf die Leiterplatte (9) entlang der mindestens einen Quer-Richtung (x, y) hält, und/oder
- insbesondere wobei der mindestens eine Tauchzapfen (5) entlang der Zapfen-Richtung (z) von den Akkumulatorzellen (3) zu der Leiterplatte (9) und nicht bis zu der Leiterplatte (9) hin vorsteht.

4. Akkupack (1) nach einem der vorhergehenden Ansprüche,
- wobei der Akkupack (1) ein Akkupackgehäuse (2) aufweist, wobei der Zellhalter (4), die Überwachungs- und/oder Kontroll-Elektronik und/oder -Sensorik und/oder der mindestens eine Konnektor (6) und der Schutzstoff (7) innerhalb des Akkupackgehäuses (2) angeordnet sind, und wobei der mindestens eine Tauchzapfen (5) entlang der mindestens einen Quer-Richtung (x, y) beabstandet zu dem Akkupackgehäuse (2) ist, und/oder
- wobei der mindestens eine Tauchzapfen (5) entlang der mindestens einen Quer-Richtung (x, y) beabstandet zu einem Außenrand (8R) des mindestens einen Halteteils (8) und/oder nah zu einer Mitte (8FM) der Außenfläche (8F) ist, und/oder
- wobei der mindestens eine Tauchzapfen (5) entlang der mindestens einen Quer-Richtung (x, y) beabstandet zu einem Außenrand (6R) der Überwachungs- und/oder Kontroll-Elektronik und/oder -Sensorik (6) und/oder nah zu einer Mitte (6M) der Überwachungs- und/oder Kontroll-Elektronik und/oder -Sensorik (6) ist, und/oder
- wobei der mindestens eine Tauchzapfen (5) entlang der mindestens einen Quer-Richtung (x, y) beabstandet zu einem Außenrand (9R) der Leiterplatte (9) und/oder nah zu einer Mitte (9FM) einer Außenfläche (9F) der Leiterplatte (9) ist.

5. Akkupack (1) nach einem der vorhergehenden Ansprüche,
- wobei die Überwachungs- und/oder Kontroll-Elektronik und/oder -Sensorik (6) eine, insbesondere formstabile, Sensoreinrichtung (10) aufweist, wobei die Sensoreinrichtung (10) entlang der Zapfen-Richtung (z), insbesondere von der Leiterplatte (9), bis in eine Sensoraussparung (4A) des Zellhalters (4) hinein, insbesondere auf Höhe mindestens einer der Akkumulatorzellen (3), vorsteht und zur Messung einer Eigenschaft (3T) der mindestens einen Akkumulatorzelle (3) ausgebildet ist,
- insbesondere wobei der mindestens eine Tauchzapfen (5) in einem Bereich der Sensoreinrichtung (10), insbesondere die Sensoreinrichtung (10) entlang der mindestens einen Quer-Richtung (x,y) umfassend, in den Schutzstoff (7) hinein taucht.

6. Akkupack (1) nach einem der vorhergehenden Ansprüche,
- wobei der mindestens eine Tauchzapfen (5) mindestens eine Hinterschneidung (17) aufweist, wobei die mindestens eine Hinterschneidung (17) in den Schutzstoff (7) derart hinein taucht, dass der Schutzstoff (7) den Zellhalter (4) in Bezug auf die Überwachungs- und/oder Kontroll-Elektronik und/oder -Sensorik und/oder den mindestens einen Konnektor (6) entlang der Zapfen-Richtung (z) hält.

7. Akkupack (1) nach einem der vorhergehenden Ansprüche,
- wobei der mindestens eine Tauchzapfen (5) entlang der Zapfen-Richtung (z) minimal 0,5 mm in den Schutzstoff (7) hinein taucht.

8. Akkupack (1) nach einem der vorhergehenden Ansprüche,
- wobei die Akkumulatorzellen (3), insbesondere der Überwachungs- und/oder Kontroll-Elektronik und/oder -Sensorik und/oder dem mindestens einen Konnektor (6) und/oder der Leiterplatte (9) zugewandte, Zellkontakte (11) aufweisen, wobei der Schutzstoff (7) nicht bis zu den Zellkontakten (11) hin reicht, insbesondere entlang der Zapfen-Richtung (z) minimal 0,5 mm beabstandet zu den Zellkontakten (11) ist, und/oder
- wobei der Akkupack (1) mindestens einen, insbesondere der Überwachungs- und/oder Kontroll-Elektronik und/oder -Sensorik und/oder dem mindestens einen Konnektor (6) und/oder der Leiterplatte (9) zugewandten, Zellverbinder (12) aufweist, wobei der mindestens eine Zellverbinder (12) die Akkumulatorzellen (3), insbesondere die Zellkontakte (11), elektrisch verbindet, wobei der Schutzstoff (7) nicht bis zu dem mindestens einen Zellverbinder (12) hin reicht, insbesondere entlang der Zapfen-Richtung (z) minimal 0,5 mm beabstandet zu dem mindestens einen Zellverbinder (12) ist, und/oder
- wobei die Akkumulatorzellen (3), insbesondere der Überwachungs- und/oder Kontroll-Elektronik und/oder -Sensorik und/oder dem mindestens einen Konnektor (6) und/oder der Leiterplatte (9) zugewandte, Sicherheitsventile (13), insbesondere die Zellkontakte (11) mit den Sicherheitsventilen (13), aufweisen, wobei der Schutzstoff (7) nicht bis zu den Sicherheitsventilen (13) hin reicht, insbesondere entlang der Zapfen-Richtung (z) minimal 0,5 mm beabstandet zu den Sicherheitsventilen (13) ist.

9. Akkupack (1) nach einem der vorhergehenden Ansprüche,
- wobei der Akkupack (1) ein Abdeckelement (14), insbesondere eine Abdeckplatte (14'), aufweist, wobei das Abdeckelement (14) zwischen den Akkumulatorzellen (3), insbesondere und dem mindestens einen Zellverbinder (12), einerseits und dem Schutzstoff (7) und/oder der Überwachungs- und/oder Kontroll-Elektronik und/oder - Sensorik und/oder dem mindestens einen Konnektor (6) andererseits angeordnet ist und mindestens eine Durchführungsöffnung (15) aufweist, wobei der mindestens eine Tauchzapfen (5) durch die Durchführungsöffnung (15) hindurch vorsteht,
- insbesondere wobei das Abdeckelement (14) derart ausgebildet ist und die Akkumulatorzellen (3), insbesondere und den mindestens einen Zellverbinder (12), derart abdeckt, dass der Schutzstoff (7) nicht bis zu den Akkumulatorzellen (3), insbesondere und dem mindestens einen Zellverbinder (12), hin reicht.

10. Akkupack (1) nach einem der vorhergehenden Ansprüche,
- wobei der Akkupack (1) ein Akkupackgehäuse (2) aufweist, wobei der Zellhalter (4), die Überwachungs- und/oder Kontroll-Elektronik und/oder -Sensorik und/oder der mindestens eine Konnektor (6) und der Schutzstoff (7) innerhalb des Akkupackgehäuses (2) angeordnet sind, und wobei das Akkupackgehäuse (2) mindestens eine Auflagefläche (2AF) aufweist, insbesondere wobei die mindestens eine Auflagefläche (2AF) entlang der mindestens einen Quer-Richtung (x, y) jenseits der Überwachungs- und/oder Kontroll-Elektronik und/oder -Sensorik und/oder dem mindestens einen Konnektor (6) und/oder der Leiterplatte (9) und/oder des Schutzstoffes (7) angeordnet ist,
- wobei der Akkupack (1) ein kompressibles Zwischenelement (14"), insbesondere das Abdeckelement (14), aufweist, und
- wobei der Zellhalter (4) entlang der Zapfen-Richtung (z) auf der Auflagefläche (2AF), insbesondere nur, mit dem Zwischenelement (14") dazwischen aufliegt.

11. Akkupack (1) nach einem der vorhergehenden Ansprüche,
- wobei der Akkupack (1) ein Akkupackgehäuse (2) aufweist, wobei das Akkupackgehäuse (2) ein Füllformteil (18) aufweist, wobei die Überwachungs- und/oder Kontroll-Elektronik und/oder -Sensorik und/oder der mindestens eine Konnektor (6) mindestens teilweise innerhalb des Füllformteils (18) angeordnet sind, und wobei der Schutzstoff (7) in die Füllform (18) eingefüllt ist, und
- wobei der Akkupack (1) ein Abdichtelement (14'"), insbesondere das Abdeckelement (14) und/oder das kompressible Zwischenelement (14"), aufweist, wobei das Abdichtelement (14‴) derart ausgebildet ist und das Füllformteil (18) derart abdichtet, dass der Schutzstoff (7) nicht jenseits des Füllformteils (18) reicht.

12. Akkupack (1) nach einem der vorhergehenden Ansprüche,
- wobei der Akkupack (1) ein Akkupackgehäuse (2) aufweist, wobei der Zellhalter (4), die Überwachungs- und/oder Kontroll-Elektronik und/oder -Sensorik und/oder der mindestens eine Konnektor (6) und der Schutzstoff (7) innerhalb des Akkupackgehäuses (2) angeordnet sind, und wobei das Akkupackgehäuse (2) mindestens ein Vorpositionierungselement (16) aufweist, insbesondere wobei das mindestens eine Vorpositionierungselement (16) entlang der mindestens einen Quer-Richtung (x, y) jenseits der Überwachungs- und/oder Kontroll-Elektronik und/oder -Sensorik und/oder dem mindestens einen Konnektor (6) und/oder der Leiterplatte (9) und/oder dem Schutzstoff (7) angeordnet ist,
- wobei das mindestens eine Vorpositionierungselement (16) den Zellhalter (4) in Bezug auf die Überwachungs- und/oder Kontroll-Elektronik und/oder -Sensorik und/oder den mindestens einen Konnektor (6) entlang der mindestens einen Quer-Richtung (x, y), insbesondere zur Vermeidung einer Falschmontage, vorpositioniert.

13. Bearbeitungssystem (100), wobei das Bearbeitungssystem (100) aufweist:
- einen Akkupack (1) nach einem der vorhergehenden Ansprüche, und
- ein elektrisch angetriebenes Bearbeitungsgerät (101),
- wobei der Akkupack (1) und das Bearbeitungsgerät (101) zur elektrischen Verbindung miteinander zur Versorgung des Bearbeitungsgeräts (101) mit elektrischer Antriebsleistung (AL) von dem Akkupack (1) ausgebildet sind.

14. Verfahren zur Herstellung eines Akkupacks (1), insbesondere nach einem der vorhergehenden Ansprüche, zur Versorgung eines elektrisch angetriebenen Bearbeitungsgeräts (101) mit elektrischer Antriebsleistung (AL), wobei das Verfahren die Schritte aufweist:
a) mindestens teilweises Einschließen einer Überwachungs- und/oder Kontroll-Elektronik und/oder -Sensorik und/oder mindestens eines Konnektors (6) mittels eines Schutzstoffes (7) in einem nicht-ausgehärteten Zustand (IZ), wobei die Überwachungs- und/oder Kontroll-Elektronik und/oder -Sensorik und/oder der mindestens eine Konnektor (6) zur Überwachung und/oder Kontrolle und/oder Messung und/oder Kontaktierung von Akkumulatorzellen (3) ausgebildet sind/ist,
b) Anordnen eines Zellhalters (4), wobei der Zellhalter (4) die Akkumulatorzellen (3) hält und mindestens einen Tauchzapfen (5) aufweist, derart, dass der mindestens eine Tauchzapfen (5) entlang einer Zapfen-Richtung (z) von den Akkumulatorzellen (3) zu der Überwachungs- und/oder Kontroll-Elektronik und/oder -Sensorik und/oder dem mindestens einen Konnektor (6) derart vorsteht, dass der mindestens eine Tauchzapfen (5) in den Schutzstoff (7) in einem nicht-ausgehärteten Zustand (IZ) hinein taucht, und
c) Aushärten des Schutzstoffes (7) in einen ausgehärteten Zustand (fZ) derart, dass der Schutzstoff (7) die Überwachungs- und/oder Kontroll-Elektronik und/oder -Sensorik und/oder den mindestens einen Konnektor (6) hält, und dass der Schutzstoff (7) den Zellhalter (4) in Bezug auf die Überwachungs- und/oder Kontroll-Elektronik und/oder - Sensorik und/oder den mindestens einen Konnektor (6) entlang mindestens einer Quer-Richtung (x, y) quer in Bezug auf die Zapfen-Richtung (z) hält.

15. Verfahren nach dem vorhergehenden Anspruch,
- wobei das Verfahren zeitlich nach dem Schritt a) und zeitlich vor dem Schritt b) den Schritt aufweist: Anhärten des Schutzstoffes (7), insbesondere derart, dass sich eine Viskosität (7V) des Schutzstoffes (7) mindestens verdoppelt.
